**Europäisches Patentamt**

**European Patent Office**

**Office européen des brevets**

(19)

(11) Publication number : **0 376 667 B1**

(12)

# EUROPEAN PATENT SPECIFICATION

(45) Date of publication of patent specification :
**02.12.92 Bulletin 92/49**

(51) Int. Cl.⁵ : **F02N 11/08**

(21) Application number : **89313559.0**

(22) Date of filing : **22.12.89**

(54) **Power supply apparatus for automotive vehicles.**

(30) Priority : **27.12.88 JP 329846/88**

(43) Date of publication of application :
**04.07.90 Bulletin 90/27**

(45) Publication of the grant of the patent :
**02.12.92 Bulletin 92/49**

(84) Designated Contracting States :
**DE GB**

(56) References cited :
**SOVIET INVENTIONS ILLUSTRATED DER-
WENT LONDON GB WEEK 8809, 3 MARCH
1988 & SU-A-1326769 (SOKOLOV)**

(73) Proprietor : **Isuzu Motors Limited
6-22-10 Minamiooi Shinagawa-ku
Tokyo 140 (JP)**

(72) Inventor : **Tsuchiya, Yoshinobu
330-4, Shimotsuchidana
Fijisawa-shi Kanagawa (JP)**
Inventor : **Kurabayashi, Ken
1-1-202, Shimomachiya 3-chome
Chigasaki-shi Kanagawa (JP)**
Inventor : **Morohoshi, Hiroyoshi
51-20, Sasanodai Asahi-ku
Yokohama-shi Kanagawa (JP)**

(74) Representative : **Brunner, Michael John et al
GILL JENNINGS & EVERY 53-64 Chancery
Lane
London WC2A 1HN (GB)**

EP 0 376 667 B1

# Description

This invention relates to a vehicular power supply apparatus mounted on an automotive vehicle to serve as the power supply for an engine starter.

A lead storage battery is mounted on an automotive vehicle to serve as the power supply of the engine starter and other electrical loads such as the auxiliary equipment of the vehicle. When the engine is started, the lead storage battery supplies the starter with a large current of the order of, say, 100 - 200 A for a short period of time. The engine crankshaft is rotated by the starter torque produced by the resulting power, thereby starting the engine.

While the vehicle is travelling, the lead storage battery is charged by the power from a generator mounted on the vehicle and driven by the engine. The battery is thus charged to make up for the large amount of power consumed at engine start.

In a well-known rechargeable lead storage battery, which is a secondary battery, charging and discharging take place owing to the chemical action of an electrolyte and electrodes. Consequently, at discharge, a large amount of current is capable of discharge in a short period of time, as indicated by the discharge characteristic of Fig. 6(a). At charging, however, a current of less then 10A is supplied over a long period of time to achieve charging, as indicated by the example of Fig. 6(b). If a large amount of current were to be supplied, heating and electrode deformation would result.

Accordingly, in vehicles whose users drive only short distances and for short periods of time (as for ordinary commuting), and in vehicles whose users make a large number of starts and stops (as for making deliveries), actual driving time is short while the number of times the engine is started is large. As a result, the electrical power expended by battery discharge at starting cannot be compensated for by sufficient charging, and hence there is the danger that the battery will die, thus making it impossible to start the engine.

A power supply apparatus for automobiles disclosed in the specification of Japanese Utility Model Application Laid-Open (KOKAI) No. 56-146644 includes a series circuit composed of an engine starter and a starter switch, and a series circuit composed of a unidirectional element and a capacitor. The two series circuits are connected in parallel to a DC power source, both ends of the capacitor are connected to a load, and power is supplied to the load.

In this proposed power supply apparatus for automobiles set forth in the above publication, the power supply circuit employs a large-capacity capacitor comprising an electrical double-layer capacitor. However, since this large-capacity capacitor is for the load, it is isolated from the starter circuit by a diode at engine start and therefore is not intended to constitute part of the engine starting power supply.

In studies regarding the designing of batteries for mounting on automotive vehicles, most emphasis has been placed on engine startability as a deciding factor of battery capacity. Accordingly, the battery mounted on an automotive vehicle is required to be high in weight and capacity in consideration of the power consumed at starting of the engine, which demands a large amount of power. On the other hand, since the battery is supplied with power after engine start by the generator mounted on the vehicle and driven by the engine, a battery of small capacity is sufficient.

A desired object therefore is to provide a vehicular power supply apparatus capable of supplying a large amount of current to an engine starter at starting of an engine and to provide a vehicular power supply apparatus capable of driving an engine starter easily even if the capacity of the battery mounted on the vehicle is reduced.

From SU-A-1326769 it is known to provide a vehicular power supply apparatus for driving an engine starter motor by electrical power from a battery mounted on an automotive vehicle, the apparatus comprising a generator driven by the engine and charging the battery in use; a capacitor connected to the battery; a starter switch connected to the battery in parallel with the capacitor; and energising means for delivering electric charge from the capacitor to the engine starter in response to closure of the starter switch.

The present invention is characterised over such prior art by the provision of circuit interrupting means positioned between the battery and an electrical load including the starter motor, arranged to interrupt the connection between the battery and the load when the starter switch is closed.

Other advantages of the present invention will be apparent from the following description taken in conjunction with the accompanying drawings, in which like reference characters designate the same or similar parts throughout the figures.

Fig. 1 is a circuit diagram illustrating an embodiment of a vehicular power supply apparatus according to the present invention;

Fig. 2 is a graph showing the relationship between starter current and time at starting of an engine;

Fig. 3 is a capacitor discharge characteristic diagram;

Fig. 4 is a diagram showing the charging characteristic of a large-capacity capacitor; and

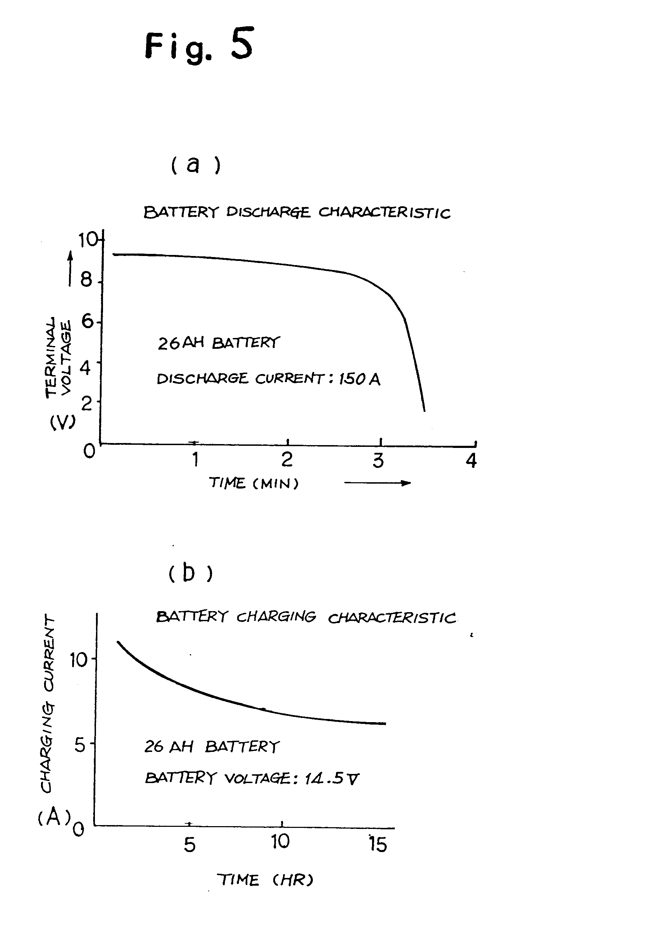

Fig. 5 is a diagram showing an example of charging and discharge characteristics of a lead storage battery.

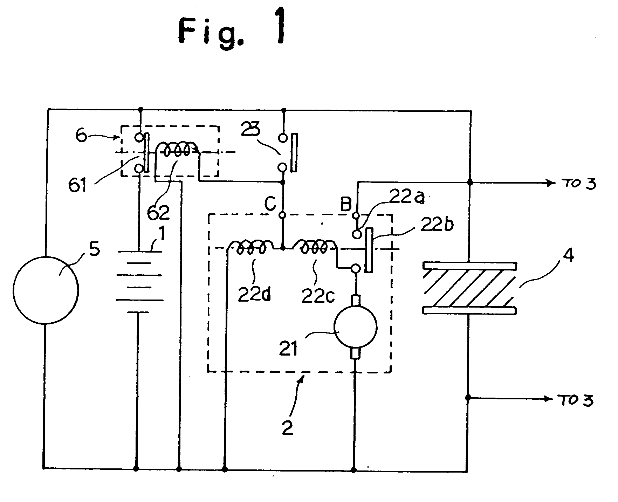

A battery 1 shown in Fig. 1 is a lead storage battery mounted on an automotive vehicle and serving as the power supply of a starter unit 2, which starts the engine of the vehicle, and an electrical load of the vehicle.

The starter unit 2 has a motor 21 engaged with the engine for rotating a crankshaft at engine start, and an electromagnetic relay 22 having main contacts 22a and a movable contact 22b. The arrangement is such that the movable contact 22b which closes the circuit by contacting the main contacts 22a is driven by the electromagnetic attracting force of two types of coils, namely an A coil 22c and a B coil 22d. The terminal on the voltage side of the motor 21 is connected to one of the main contacts 22a and to one end of the A coil 22c, the other end of the A coil 22c is connected to one end of the B coil 22d and to a C terminal of the starter unit 2, and the other main contact 22a is connected to a B terminal of the starter unit 2. The ground terminal of the motor 21 and the other end of the B coil 22d are grounded to the vehicle body. Numeral 23 denotes a starter switch connected across a +ve terminal of the battery 1 and the C terminal of the starter unit 2. By closing the starter switch 23, when the engine is started, the starter unit 2 is actuated so that the engine is started by driving power from the motor 21.

Numeral 4 denotes a capacitor having a large capacity. Employed as this capacitor is one having the size of an electrical double layer capacitor used in the back-up power supply of the memory of an electronic device. For example, the capacitor might have a static electric capacitance on the order of 10 - 150 F. The +ve terminal of the capacitor 4 is connected to the B terminal of the starter unit 2, namely the +ve terminal side of the battery 1, and the -ve terminal of the capacitor 4 is grounded. Thus the capacitor 4 is sufficiently charged at all times by the battery 1.

A relay 6 is connected across the +ve terminal of battery 1 and a +ve circuit on the side of the vehicle. Contacts 61 of the relay 6 are normally closed to connect the +ve terminal of the battery 1 to the +ve circuit on the vehicle side. The relay 6 has a coil 62 which, by being energized, causes the contacts 61 to open. The coil 62 is connected across the C terminal of the starter unit 2 and ground.

Numeral 5 denotes a well-known generator driven by the engine. The generated power is converted into direct current, which charges the battery 1.

The operation of the embodiment constructed as set forth above will now be described.

When the starter switch 23 is closed at starting of the engine, the current from the battery 1 flows from the A coil 22c of the electromagnetic relay 22 to the motor 21 via the C terminal of the starter unit 2, and from the C terminal to the B coil 22d, whereby the movable contact 22b is attracted by the electromagnetic attracting force of the two coils to close the main contacts 22a.

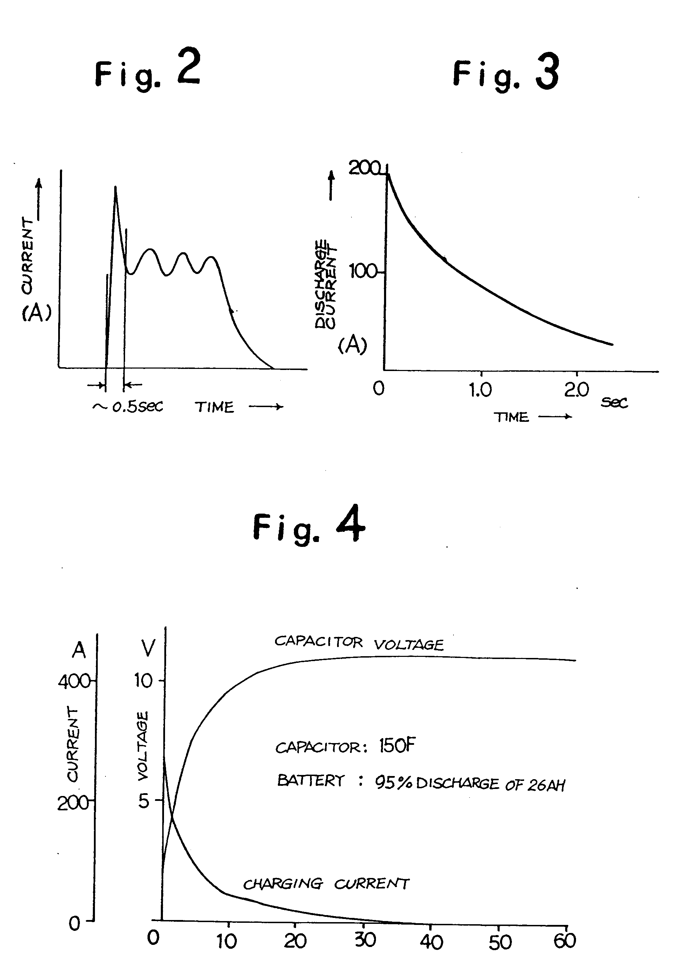

Consequently, the charge in the large-capacity capacitor 4 sufficiently charged thus far by the battery 1 and the current from the battery 1 flow into the motor 21. These two large currents start the motor 21, which applies a strong driving force to the engaged crankshaft to start the engine. The large current for starting the motor at this time lasts for about 0.5 sec, as shown in the example of Fig. 2. If, by way of example, the amount of charge stored in the battery 1 should diminish to the extent that starting of the engine would be impossible with the current from the battery, the large current resulting from the charge in the large-capacity capacitor will still drive the motor 21 strongly enough to achieve engine start.

Furthermore, by closing the starter switch 2, however, the relay 6 is opened so that the +ve terminal of the battery 1 is disconnected from the +ve circuit on the vehicle side, thereby protecting against consumption of charge accumulated in the battery 1. Furthermore, even though power is not supplied to the +ve circuit on the vehicle side from the battery 1 due to opening of the relay 6, the coil 62 of the relay 6 and the B coil 22d of the electromagnetic relay 22 are supplied with current from the large capacity capacitor 4, as a result of which the attracting action of both coils is maintained.

As for the capacity of the capacitor 4, ordinarily, the starter current required when starting a gasoline engine having a displacement of 1.5 litres is of the order of 100 - 200 A, and the time needed to start the engine is several seconds at most. Accordingly, the capacity of the capacitor needs to have a value that satisfies these requirements.

Fig. 3 shows an example of the discharging characteristic of a capacitor. The discharge equation of an ordinary capacitor is as expressed by the following equation:

$$I = \frac{E}{R} = \frac{E_o}{R} \exp\left(-\frac{t}{RC}\right) \quad (1)$$

where

$E_o$ = capacitor charging voltage
$R$ = load resistance
$C$ = capacitor capacitance

The load resistance R is about 0.05 ohm for a vehicle running on gasoline. A discharge time of several seconds will suffice, as set forth above. Thus, if RC = 5 - 7s, then $C \approx 100 - 150$ F.

Thus, the calculations are based on a case where the charge in the capacitor is discharged in several seconds when the starter is actuated. Since a large current is required for 0.5 sec, RC = 0.5 sec will hold if the load of the capacitor is limited to this period of time. Therefore, $C \approx 10$ F will suffice.

In accordance with the present embodiment as set forth above, a large-capacity capacitor capable of storing a large amount of electric charge is attached as part of the power supply of a vehicle. Therefore, even if the amount of charge in a battery is constantly small because it is used in a vehicle whose user drives only short distances and for short periods of time or in a vehicle whose user makes a large number of starts and stops, the starter can be driven by the charge in the large-capacity capacitor at start-up, thus making it possible to start the engine.

By way of example, Fig. 4 illustrates data obtained when a capacitor having a capacitance of about 150 F is charged by a battery discharged to 95% of its total charge. It will be appreciated that charging of the capacitor is completed in approximately 20 sec, as a result of which starting of the engine can be accomplished sufficiently.

Further, providing the large-capacity capacitor reduces dependence upon the amount of charge in the battery, when the engine is started. When a vehicle is being designed, therefore, the capacity of the battery with which the vehicle is to be provided can be made smaller than would be the case with the prior art.

For example, in the case of a passenger car fueled by gasoline, the capacity of the battery used ordinarily is 25 - 30 AH. If the present invention is applied, however, a capacity of 10 AH will suffice. The following is an example of the dimensions and weight of the battery and capacitor:

Dimensions of 27 AH battery: 227 x 127 x 187 mm
Weight: 9.5 kg
Dimensions of 10 AH battery: 147 x 92 x 138 mm
Weight: 4.5 kg
Dimensions of 150 F/16 V capacitor: 120 x 120 x 140 mm
Weight: 5.5 kg
Dimensions of 10 F/16 V capacitor : 60 x 60 x 40 mm
Weight: 0.65 kg

## Claims

1. A vehicular power supply apparatus for driving an engine starter motor (21) by electrical power from a battery (1) mounted on an automotive vehicle, the apparatus comprising a generator (5) driven by the engine and charging the battery in use; a capacitor (4) connected to the battery; a starter switch (23) connected to the battery in parallel with the capacitor; and energising means (22a-d) for delivering electric charge from the capacitor to the engine starter in response to closure of the starter switch; characterised by
circuit interrupting means (6) positioned between the battery and an electrical load including the starter motor (21), arranged to interrupt the connection between the battery and the load when the starter switch is closed.

2. Apparatus according to claim 1, wherein the energising means (22) is a first electromagnetic relay which comprises a coil (22c) having one end connected to the starter switch (23); main contacts (22a), a first of which is connected to the capacitor and a second of which is connected to the engine starter; and a movable contact (22b) for closing the main contacts by energisation of the coil.

3. Apparatus according to claim 2, wherein the other end of the coil (22c) is connected to the second of the main contacts (22a).

4. Apparatus according to any of claims 1 to 3, further comprising normally closed contacts (61) connected across the battery and an electrical load (3) mounted on the vehicle, and a second electromagnetic relay (6) connected to the first electromagnetic relay for opening the normally closed contacts when energised.

5. Apparatus according to any of claims 1 to 4, wherein the capacitor is a large-capacity electrical double layer capacitor.

## Patentansprüche

1. Ein Stromversorgungsgerät für Fahrzeuge zum Antrieb eines Motoranlassers (21) durch elektrische Kraft von einer Batterie (1), die an einem Kraftwagen angebracht ist, mit einem Generator (5), der durch den Motor angetrieben wird und während des Betriebes die Batterie lädt; einem Kondensator (4), der an die Batterie angeschlossen ist; einem Anlasserschalter (23), der parallel mit dem Kondensator an der Batterie angeschlossen ist, und Leistungsmitteln (22a-d) zur Zufuhr elektrischer Ladung von dem Kondensator zu dem Motoranlasser in Abhängigkeit vom Schließen des Anlasserschalters, **gekennzeichnet durch**
Schaltkreisunterbrechungsmittel (6), die zwischen der Batterie und einer elektrischen Last einschließlich dem Anlasser (21) angebracht und so beschaffen sind, daß sie die Verbindung zwischen der Batterie und der Last unterbrechen, wenn der Anlasserschalter geschlossen wird.

2. Gerät nach Anspruch 1, bei dem die Leistungsmittel (22) ein erstes elektromagnetisches Relais sind, das eine Spule (22c), dessen eines Ende mit dem Anlasserschalter (23) verbunden ist, Hauptkontakte (22a), von denen ein erster an den Kondensator und ein zweiter an den Motoranlasser angeschlossen ist, und einen bewegbaren Kontakt (22b) umfaßt, um die Hauptkontakte durch Unter-Strom-Setzen der Spule zu schließen.

**3.** Gerät nach Anspruch 2, bei dem das andere Ende der Spule (22c) mit dem zweiten Hauptkontakt (22a) verbunden ist.

**4.** Gerät nach einem der Ansprüche 1 bis 3, außerdem mit normalerweise geschlossenen Kontakten (61), die über die Batterie und eine an dem Fahrzeug befestigte elektrische Last (3) geschlossen sind, und einem zweiten elektromagnetischen Relais (6), das an dem ersten elektromagnetischen Relais zum Öffnen der normalerweise geschlossenen Kontakte angeschlossen ist, wenn es mit Strom versorgt wird.

**5.** Gerät nach einem der Ansprüche 1 bis 4, bei dem der Kondensator ein elektrischer Doppelschichtkondensator mit großer Kapazität ist.

**Revendications**

**1.** Appareil d'apport de puissance de véhicule pour entraîner un moteur démarreur de moteur thermique (21) par énergie électrique depuis une batterie (1) montée sur un véhicule automobile, l'appareil comportant un générateur (5) entraîné par le moteur thermique pour charger la batterie en service; un condensateur (4) relié à la batterie; un démarreur (23) raccordé à la batterie en parallèle avec le condensateur; et des moyens d'excitation (22a-d) pour amener la charge d'électricité du condensateur au démarreur de moteur thermique en réponse à la fermeture du démarreur; caractérisé par

des moyens rupteurs de circuit (6) situés entre la batterie et une charge électrique y compris le démarreur (21), agencés pour interrompre la liaison ente la batterie et la charge lorsque le démarreur est fermé.

**2.** Appareil selon la revendication 1, selon lequel les moyens d'excitation (22) sont un premier relais électromagnétique comportant une bobine (22c) dont une extrémité est reliée au démarreur (23); les contacts principaux (22a), dont un premier est raccordé au condensateur et un deuxième est raccordé au démarreur de moteur thermique; et un contact mobile (22b) de fermeture des contacts principaux par excitation de la bobine.

**3.** Appareil selon la revendication 2, dont l'autre extrémité de la bobine (22c) est raccordée au deuxième des contacts principaux (22a).

**4.** Appareil selon l'une ou l'autre des revendication 1 à 3, comportant également des contacts normalement fermés (61) raccordés à la batterie et une charge électrique (3) montée sur le véhicule, et un deuxième relais électromagnétique (6) raccordé au premier relais électromagnétique pour l'ouverture des contacts normalement fermés lors de l'excitation.

**5.** Appareil selon l'une ou l'autre des revendication 1 à 4, dont le condensateur est un condensateur électrique haute capacité à double-couche.

# Fig. 1

# Fig. 2

~ 0.5 sec   TIME ⟶

# Fig. 3

# Fig. 4

CAPACITOR VOLTAGE

CAPACITOR: 150F

BATTERY : 95% DISCHARGE OF 26AH

CHARGING CURRENT

7

# Fig. 5

## ( a )

BATTERY DISCHARGE CHARACTERISTIC

26 AH BATTERY

DISCHARGE CURRENT : 150 A

(Y-axis: TERMINAL VOLTAGE (V), X-axis: TIME (MIN))

## ( b )

BATTERY CHARGING CHARACTERISTIC

26 AH BATTERY

BATTERY VOLTAGE : 14.5 V

(Y-axis: CHARGING CURRENT (A), X-axis: TIME (HR))